(19) Europäisches Patentamt
European Patent Office
Office européen des brevets

(11) EP 0 901 986 B1

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(51) Int Cl.$^7$: **C01B 33/193**, C08K 3/36

(21) Anmeldenummer: **98116279.5**

(22) Anmeldetag: **28.08.1998**

(54) **Leicht dispergierbare Fällungskieselsäure**

Easily dispersible precipitated silica

Silice de précipitation légèrement dispersable

(84) Benannte Vertragsstaaten:
**AT BE CH CY DE DK ES FI FR GB GR IE IT LI LU MC NL PT SE**

(30) Priorität: **15.09.1997 DE 19740440**

(43) Veröffentlichungstag der Anmeldung:
**17.03.1999 Patentblatt 1999/11**

(73) Patentinhaber: **Degussa AG**
**40474 Düsseldorf (DE)**

(72) Erfinder:
- **Uhrlandt, Stefan, Dr.**
  **51143 Köln (DE)**
- **Siray, Mustafa, Dr.**
  **53127 Bonn (DE)**
- **Blume, Anke, Dr.**
  **50374 Erfstadt (DE)**
- **Freund, Burkhard, Dr.**
  **50374 Erfstadt (DE)**

(56) Entgegenhaltungen:
**EP-A- 0 501 227**
**EP-A- 0 647 591**
**EP-A- 0 745 558**
**EP-A- 0 754 650**
**EP-A- 0 755 899**
**DE-A- 4 423 493**
**US-A- 4 590 052**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 901 986 B1

Printed by Jouve, 75001 PARIS (FR)

## Beschreibung

Die Erfindung betrifft eine leicht dispergierbare Fällungskieselsäure, das Verfahren zu ihrer Herstellung und ihre Verwendung in Kautschukmischungen.

Fällungskieselsäuren in Kautschukmischungen einzuarbeiten ist bekannt (S. Wolff, Kautschuk und Gummikunstst. 7 (1988) S. 674). Fällungskieselsäuren müssen für die Anwendung in Kauschukmischungen leicht dispergierbar sein. Eine schlechte Dispergierbarkeit ist häufig die Begründung dafür, daß Fällungskieselsäuren in Reifenmischungen, besonders bei hohen Füllgraden, nicht zum Einsatz kommen.

Aus dem Dokument EP-A 0 520 862 sind Fällungskieselsäuren, die als Füllstoff in Kautschukmischungen für Reifen eingesetzt werden, bekannt.

Aus dem Dokument EP-A 0 157 703 ist eine Fällungskieselsäure, die gemäß dem Dokument EP-A 0 501 227 hergestellt werden kann, bekannt.

Die bekannten Fällungskieselsäuren haben den Nachteil, daß sie eine schlechte Dispersion aufweisen.

In EP-A 0 647 591 und EP-A 0 157 703 wird eine Fällungskieselsäure, die gegenüber den oben genannten Fällungskieselsäuren eine verbesserte Dispersion aufweist, beschrieben. Durch gestiegene Anforderungen der Reifenindustrie ist auch die verbesserte Dispersion dieser Fällungskieselsäure für die Anwendung in Reifenmischungen nicht mehr ausreichend.

Es bestand somit die Aufgabe, eine Fällungskieselsäure, die in Kautschukmischungen deutlich besser dispergierbar ist, zu entwickeln.

Gegenstand der Erfindung ist eine Fällungskieselsäure, gekennzeichnet durch die folgenden physikalisch-chemischen Daten:

| | |
|---|---|
| BET-Oberfläche | 120 - 300 $m^2/g$ |
| CTAB-Oberfläche | 100 - 300 $m^2/g$ |
| Verhältnis BET/CTAB | 0,8 - 1,3 |
| Searszahl (Verbrauch 0,1 n NaOH) | 6 - 25 ml |
| DBP-Zahl | 150 - 300 g/100 g |
| wk-Koeffizient (wie in der Beschreibung definiert) | < 3,4 |
| Partikelgröße der abgebauten Partikel (wie in der Beschreibung definiert) | < 1,0 μm |
| Partikelgröße der nicht abbaubaren Partikel (wie in der Beschreibung definiert) | 1,0 - 100 μm |

Die physikalisch-chemischen Daten werden mit folgenden Methoden bestimmt:

| | |
|---|---|
| BET-Oberfläche | Areameter, Fa. Ströhlein, gemäß ISO 5794/Annex D |
| CTAB-Oberfläche | bei pH 9, gemäß Jay, Janzen und Kraus in "Rubber Chemistry and Technology" 44 (1971) 1287 |
| Searszahl | nach G.W. Sears, Analyt. Chemistry 12 (1956) 1982 |
| DBP-Zahl | ASTM D 2414-88 |
| wk-Koeffizient | Cilas-Granulometer 1064 L |

Die erfindungsgemäße Fällungskieselsäure kann in einer besonders bevorzugten Ausführungsform die folgenden physikalisch-chemischen Daten aufweisen:

| | |
|---|---|
| BET-Oberfläche | 120 - 200 $m^2/g$ |
| CTAB-Oberfläche | 100 - 200 $m^2/g$ |
| Verhältnis BET/CTAB | 0,8 - 1,3 |
| Searszahl (Verbrauch 0,1 n NaOH) | 6 - 25 ml |
| DBP-Zahl | 150 - 300 g/100 g |
| wk-Koeffizient (wie in der Beschreibung definiert) | < 3,4 |
| Partikelgröße der abgebauten Partikel (wie in der Beschreibung definiert) | < 1,0 μm |
| Partikelgröße der nicht | |

(fortgesetzt)

| | |
|---|---|
| abbaubaren Partikel (wie in der Beschreibung definiert) | 1,0 - 30 µm |

Die erfindungsgemäße Fällungskieselsäure weist eine Teilchengrößenverteilung, die nach der Einarbeitung in Kautschukmischungen eine sehr gute Dispersion gewährleistet, auf. Kennzeichnend für eine sehr gute Dispersion ist ein sehr kleiner wk-Koeffizient.

Ein weiterer Gegenstand der Erfindung ist ein Verfahren zur Herstellung der Fällungskieselsäure mit den folgenden physikalisch-chemischen Parametern:

| | |
|---|---|
| BET-Oberfläche | 120 - 300 $m^2/g$ |
| CTAB-Oberfläche | 100 - 300 $m^2/g$ |
| Verhältnis BET/CTAB | 0,8 - 1,3 |
| Searszahl (Verbrauch 0,1 n NaOH) | 6 - 25 ml |
| DBP-Zahl | 150 - 300 g/100 g |
| wk-Koeffizient (wie in der Beschreibung definiert) | < 3,4 |
| Partikelgröße der abgebauten Partikel (wie in der Beschreibung definiert) | < 1,0 µm |
| Partikelgröße der nicht abbaubaren Partikel (wie in der Beschreibung definiert) | 1,0 - 100 µm |

welches dadurch gekennzeichnet ist, daß man Alkalisilikat mit Mineralsäuren bei Temperaturen von 60 - 95°C bei einem pH-Wert von 7,0 - 11,0 unter kontinuierlichem Rühren umsetzt, die Umsetzung bis zu einer Feststoffkonzentration von 40 g/l - 110 g/l fortsetzt, der pH-Wert auf einen Wert zwischen 3 und 5 eingestellt, die Fällungskieselsäure abfiltriert, wäscht und anschließend trocknet gegebenenfalls vermahlt oder granuliert, wobei man für die Herstellung einer Fällungskieselsäure mit einer BET-Oberfläche von 120 bis 140 $m^2/g$ und einem WK-Koeffizienten von kleiner 3,4 die folgenden Bedingungen einhält:

| | |
|---|---|
| Feststoffkonzentration | 68 bis 85 g/l |
| Temperatur | 74 bis 82 °C |
| pH-Wert | 8 bis 9, vorzugsweise 8,5 |

1.Zugabe von Wasserglas und Schwefelsäure während 15 bis 25 Minuten,

2. Unterbrechung der Zugabe von 30 bis 90 Minuten,

3.Zugabe von Wasserglas und Schwefelsäure während 50 bis 70 Minuten,

wobei die Gesamtfällzeit 130 bis 140 Minuten beträgt oder für die Herstellung einer Fällungskieselsäure mit einer BET-Oberfläche von 140 bis 160 $m^2/g$ und einem WK-Koeffizienten kleiner 3,4 die folgenden Bedingungen einhält:

| | |
|---|---|
| Feststoffkonzentration | 40 bis 60 g/l |
| Temperatur | 88 bis 95 °C |
| pH-Wert: | 7 bis 9, vorzugsweise 7,5 bis 8 |

Zugabe von Wasserglas und Schwefelsäure während 38 bis 50 Minuten oder für die Herstellung einer Fällungskieselsäure mit einer BET-Oberfläche von 160 bis 180 $m^2/g$ und einem WK-Koeffizienten kleiner 3,4 die folgenden Bedingungen einhält:

| | |
|---|---|
| Feststoffkonzentration | 68 bis 84 g/l |
| Temperatur | 59 bis 65 °C |
| pH-Wert | 8 bis 9, vorzugsweise 8,5 |

Zugabe von Wasserglas und Schwefelsäure während 150 bis 170 Minuten oder für die Herstellung einer Fällungskieselsäure mit einer BET-Oberfläche von 180 bis 200 $m^2/g$ und einem WK-Koeffizienten kleiner 3,4 die folgenden Bedingungen einhält:

| | |
|---|---|
| Feststoffkonzentration | 74 bis 94 g/l |
| Temperatur | 75 bis 83 °C |
| pH-Wert | 8 bis 10 |

Zugabe von Wasserglas und Schwefelsäure während 60 bis 70 Minuten oder für die Herstellung einer Fällungskieselsäure mit einer BET-Oberfläche von 200 bis 300 $m^2$/g, vorzugsweise 200 bis 240 $m^2$/g, und einem WK-Koeffizienten kleiner 3,4 die folgenden Bedingungen einhält:

| | |
|---|---|
| Feststoffkonzentration | 70 bis 110 g/l |
| Temperatur | 60 bis 76 °C |
| pH-Wert | 8 bis 10, vorzugsweise 9 |

Zugabe von Wasserglas und Schwefelsäure während 60 bis 86 Minuten.

In einer Ausführungsform der Erfindung kann die Zugabe der Säure und des Wasserglases für 30 bis 90 Minuten unterbrochen und anschließend fortgesetzt werden.

In einer Ausführungsform der Erfindung kann die Feststoffkonzentration kleiner 80 g/l sein und/oder die Temperatur weniger als 80 °C betragen und/oder die Fällzeit weniger als 76 Minuten betragen und/oder die Fällung unterbrochen werden und/oder eine verdünnte beziehungsweise konzentrierte Mineralsäure eingesetzt werden.

In einer weiter bevorzugten Ausführungsform kann man handelsübliches Natronwasserglas (Modul 3,2 - 3,5) mit Schwefelsäure bei einem pH-Wert zwischen 7,5 und 10,5 umsetzen, wobei ein Teil des Natronwasserglases bereits zum Einstellen des pH-Wertes in die Vorlage gegeben wird. Die gleichzeitige Zugabe von Wasserglas und Schwefelsäure wird über einen Zeitraum bis 120 Minuten aufrechterhalten, wobei in einer besonders bevorzugten Form die Zugabe für 30 bis 90 Minuten unterbrochen werden kann. Anschließend kann auf pH 3 - 5 angesäuert, filtriert, gewaschen und getrocknet werden. Zur Erzielung einer besonders guten Dispergierbarkeit erfolgt die gleichzeitige Zugabe von Natronwasserglas und Schwefelsäure vorzugsweise zwischen 40 - 90 Minuten. Dabei kann die Oberfläche der Kieselsäure über die Fälldauer eingestellt werden. In einer besonders bevorzugten Form können die Fällungskieselsäuren einer Flash-Trocknung unterworfen werden, wobei die Fällungskieselsäure abfiltriert, gewaschen und redispergiert werden kann.

Zur Filtration kann man Kammerfilterpressen oder Membranfilterpressen oder Bandfilter oder Drehfilter oder Membranfilterpressautomaten oder zwei der Filter in Kombination einsetzen.

Zur Trocknung kann man einen Stromtrockner, Etagentrockner, Flash-Trockner, Spin-Flash-Trockner einsetzen.

Den verflüssigten Filterkuchen kann man in einem Sprühtrockner mit Atomizer oder Zweistoffdüse oder Einstoffdüse und/oder integriertem Fließbett trockner.

Zur Granulation kann man Walzenkompaktor einsetzen.

Die erfindungsgemäße Fällungskieselsäure kann mit Organosilanen der Formeln I bis III modifiziert werden:

$$[R^1{}_n\text{ - }(RO)_{3-n}Si\text{-}(Alk)_m\text{-}(Ar)_p]_q[B] \qquad (I),$$

$$R^1{}_n(RO)_{3-n}Si\text{-}(Alkyl) \qquad (II),$$

oder

$$R^1{}_n(RO)_{3-n}Si\text{-}(Alkenyl) \qquad (III),$$

in denen bedeuten

B: -SCN, -SH, -Cl, $-NH_2$ (wenn q = 1) oder -Sx- (wenn q = 2),

R und $R^1$: eine Alkylgruppe mit 1 bis 4 Kohlenstoffatomen, den Phenylrest,wobei alle Reste R und $R^1$ jeweils die gleicher oder eine verschiedene Bedeutung haben können,

R: eine $C_1$-$C_4$-Alkyl, $C_1$-$C_4$-Alkoxygruppe,

n: 0; 1 oder 2,

Alk: einen zweiwertigen geraden oder verzweigten Kohlenwasserstoffrest mit 1 bis 6 Kohlenstoffatomen,
m: 0 oder 1,
Ar: einen Arylenrest mit 6 bis 12 C-Atomen, bevorzugt 6 C-Atome,
p: 0 oder 1 mit der Maßgabe, daß p und n nicht gleichzeitig 0 bedeuten,
x: eine Zahl von 2 bis 8,
Alkyl: einen einwertigen geraden oder verzweigten ungesättigten Kohlenwasserstoffrest mit 1 bis 20 Kohlenstoffatomen, bevorzugt 2 bis 8 Kohlenstoffatomen,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.

Die Modifizierung mit Organosilanen kann in Mischungen von 0,5 bis 50 Teilen, bezogen auf 100 Teile Kieselsäure, insbesondere 2 bis 15 Teile, bezogen auf 100 Teile Fällungskieselsäure, durchgeführt werden, wobei die Reaktion zwischen Fällungskieselsäure und Silan während der Mischungsherstellung (in situ) oder außerhalb (vormodifiziert) durchgeführt werden kann.

In einer bevorzugten Ausführungsform der Erfindung kann als Silan das Bis (triethoxysilyl-propyl) -tetrasulfan eingesetzt werden.

Die erfindungsgemäße Fällungskieselsäure kann in vulkanisierbaren Kautschukmischungen als Verstärkerfüllstoff in Mengen von 5 bis 200 Teilen, bezogen auf 100 Teile Kautschuk als Pulver, Mikroperlen oder Granulat sowohl mit Silanmodifizierung als auch ohne Silanmodifizierung eingemischt werden.

Die Zugabe eines oder mehrerer der oben genannten Silane kann zusammen mit den erfindunggemäßen Kieselsäuren zur Kautschukmischung erfolgen, wobei die Reaktion zwischen Füllstoff und Silan während des Mischprozesses bei erhöhten Temperaturen abläuft (in-situ-Modifizierung) oder in bereits vormodifizierter Form (zum Beispiel gemäß DE-PS 40 04 781), das heißt, beide Reaktionspartner werden außerhalb der eigentlichen Mischungsherstellung zur Reaktion gebracht.

Eine weitere Mischung besteht darin, die Fällungskieselsäuren mit Organosilanen in Mischungen von 0,5 bis 50 Teilen, bezogen auf 100 Teile Fällungskieselsäure, insbesondere 2 bis 15 Teile, bezogen auf 100 Teile Fällungskieselsäure zu modifizieren, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

Neben Mischungen, die ausschließlich die erfindungsgemäßen Kieselsäuren, mit und ohne Organosilane gemäß Formel I bis III als Füllstoffe enthalten, können die Kautschukmischungen zusätzlich mit einem oder mehreren mehr oder weniger verstärkenden Füllstoffen gefüllt sein. In erster Linie gebräuchlich wäre hier ein Verschnitt zwischen Rußen (zum Beispiel Furnace-, Gas-, Flamm-, Acetylenruße) und den erfindungsgemäßen Kieselsäuren, mit und ohne Silan, aber auch zwischen Naturfüllstoffen, wie zum Beispiel Clays, Kieselkreiden, weiteren kommerziellen Kieselsäuren und den erfindungsgemäßen Kieselsäuren.

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen kann eingehalten werden. Neben den erfindungsgemäßen Kieselsäuren, den Organosilanen und anderen Füllstoffen bilden die Elastomere einen weiteren wichtigen Bestandteil der Kautschukmischung. Die erfindungsgemäßen Kieselsäuren können in allen mit Beschleuniger/Schwefel, aber auch peroxidisch vernetzbaren Kautschukarten, eingesetzt werden. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den geannnten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile wie Weichmacher, Stabilisatoren, Aktivatoren, Pigmente, Alterungsschutzmittel und Verarbeitungshilfsmittel in den üblichen Dosierungen.

Die erfindungsgemäßen Kieselsäuren, mit und ohne Silan, finden Einsatz in allen Gummianwendungen, wie zum Beispiel Reifen, Fördergurte, Dichtungen, Keilriemen, Schläuche, Schuhsohlen etc. Außerdem kann die erfindungsgemäße Fällungskieselsäure in Batterieseparatoren, in Silikonkautschuk und als Trägerkieselsäure zum Einsatz kommen.

**Beispiele**

Zur Erzielung eines guten Wertebildes in einer Polymermischung ist die Disperion der Fällungskieselsäure in der Matrix, dem Polymer, von entscheidender Bedeutung. Es hat sich gezeigt, daß der wk-Koeffizient ein Maß für die Dispergierbarkeit einer Fällungskieselsäure ist. Der wK-Koeffizient wird wie folgt bestimmt:

Die Messung beruht auf dem Prinzip der Laserbeugung. Dabei wird mit einem CILAS-Granulometer 1064 L gemessen. Zur Bestimmung werden 1,3 g der Fällungskieselsäure in 25 ml Wasser überführt und 4,5 Minuten mit Ultraschall bei 100 W (90 % gepulst) behandelt. Danach wird die Lösung in die Meßzelle überführt und eine weitere Minute mit Ultraschall behandelt. Die Detektion mit Hilfe zweier sich in einem unterschiedlichen Winkel zur Probe befindlichen Laserdioden erfolgt während der Ultraschallbehandlung. Nach dem Prinzip der Lichtbeugung werden die Laserstrahlen gebeugt. Das entstehende Beugungsbild wird rechnergestützt ausgewertet. Die Methode ermöglicht es, über einen weiten Meßbereich (ca. 40 nm - 500 µm) die Partikelgrößenverteilung zu bestimmen.

Ein wesentlicher Punkt hierbei ist, daß der Energieeintrag durch Ultraschall eine Simulation des Energieeintrags durch mechanische Kräfte in den Knetern der Reifenindustrie darstellt.

Ergebnisse und Messungen der Partikelgrößenverteilung von erfindungsgemäßen Fällungskieselsäuren und von Vergleichskieselsäuren zeigen die Figuren 1 - 4.

Die Kurven zeigen im Bereich um 1,0 - 100 µm ein erstes Maximum in der Partikelgrößenverteilung und im Bereich < 1,0 µm ein weiteres Maximum. Der Peak im Bereich 1,0 - 100 µm gibt den Anteil an unzerkleinerten Kieselsäurepartikeln nach der Ultraschallbehandlung an. Diese recht groben Partikel werden in den Kautschukmischungen schlecht dispergiert. Der zweite Peak mit deutlich kleineren Partikelgrößen (< 1,0 µm) gibt denjenigen Teil an Partikeln der Kieselsäure, der während der Ultraschallbehandlung zerkleinert worden ist, an. Diese sehr kleinen Partikel werden in Kautschukmischungen ausgezeichnet dispergiert.

Der wK-Koeffizient ist nun das Verhältnis der Peakhöhe der nicht abbaubaren Partikel (B), deren Maximum im Bereich 1,0 - 100 µm liegt, zur Peakthöhe der abgebauten Partikel (A), deren Maximum im Bereich < 1,0 mm liegt.

Die Zusammenhänge veranschaulicht die Grafik gemäß Figur 6. In der Figur 6 bedeuten:

$$wk = \frac{\text{Peakhöhe der nicht abbaubaren Partikel (B)}}{\text{Peakhöhe der abgebauten Partikel (A)}}$$

A' = Bereich von 0 bis < 1,0 µm
B' = Bereich 1,0 µm - 100 µm

Der wk-Koeffizient ist damit ein Maß für die "Abbaubarkeit" (=Dispergierbarkeit) der Fällungskieselsäure. Es gilt: Eine Fällungskieselsäure ist umso leichter dispergierbar, je kleiner der wk-Koeffizient ist und je mehr Partikel bei der Einarbeitung in Kautschuk abgebaut werden.

Die erfindungsgemäßen Kieselsäuren haben wk-Koeffizienten < 3,4. Das Maximum in der Partikelgrößenverteilung der nicht abbaubaren Partikel der erfindungsgemäßen Pällungskieselsäure liegt im Bereich 1,0 - 100 µm. Das Maximum in der Partikelgrößenverteilung der abgebauten Partikel der erfindungsgemäßen Fällungskieselsäure liegt im Bereich < 1,0 µm.

Bekannte Fällungskieselsäuren haben deutlich höhere wk-5 Koeffizienten und andere Maxima in den Partikelgrößenverteilungen gemessen mit dem CILAS-Granulometer 1064 L und sind somit schlechter dispergierbar.

In den Beispielen werden folgende Stoffe eingesetzt:

| | |
|---|---|
| First Latex Crepe | - Naturkautschuk |
| CBS | - Benzothiazyl-2-cyclohexylsulfenamid |
| TMTM | - Tetramethylthiurammonosulfid |
| SI 69 | - Bis(3-triethoxysilylpropyl)tetrasulfan (Degussa AG) |
| DEG | - Diethylenglykol |
| VSL 1955 S 25 | - Styrol-Butadien-Kautschuk auf Basis Lösungspolymerisation mit einem Styrolgehalt von 25 % und einem Vinylgehalt von 55 % (Bayer AG) |
| DPG | - Diphenylguanidin |
| Vulkanox4020 | - N-(1,3-Dimethylbutyl)-N'-phenyl-p-phenylendiamin (Bayer AG) |
| Protector G 35 | - Ozonschutzwachs |
| ZBED | - Zink-dibenzyldithiocarbamat |
| Buna CB 24 | - Butadienkautschuk der Bunawerke Hüls |
| Naftolen ZD | - Aromatischer Mineralölweichmacher |

Vergleichsprodukte:

| | |
|---|---|
| Ultrasil VN 2 | - Kieselsäure der Degussa mit einer $N_2$-Oberfläche von ca. 125 $m^2$/g |
| Ultrasil VN 3 | - Kieselsäure der Degussa mit einer $N_2$-Oberfläche von ca. 175 $m^2$/g |
| Ultrasil 3370 | - Kieselsäure der Degussa mit einer $N_2$-Oberfläche von ca. 175 $m^2$/g |
| Ultrasil 3380 | - Kieselsäure der Degussa mit einer $N_2$-Oberfläche von ca. 175 $m^2$/g |
| Hisil 233 | - Kieselsäure der PPG mit einer $N_2$-Oberfläche von ca. 150 $m^2$/g |
| KS 300 | - Kieselsäure der Akzo mit einer $N_2$-Oberfläche von ca. 125 $m^2$/g |
| KS 404 | - Kieselsäure der Akzo mit einer $N_2$-Oberfläche von ca. 175 $m^2$/g |
| KS 408 | - Kieselsäure der Akzo mit einer $N_2$-Oberfläche von ca. 175 $m^2$/g |
| Zeosil 1165 MP | - Kieselsäure der Rhone-Poulenc mit einer $N_2$-Oberfläche von ca. 150 $m^2$/g |

Beispiel 1

Herstellung einer Fällungskieselsäure im $N_2$-Oberflächenbereich von 120 - 140 $m^2$/g

In einem Bottich werden unter Rühren 17,6 l Wasser mit Natronwasserglas (Modul 3,42, Dichte 1,346) bis pH 8,5 vermischt und auf 78 °C erwärmt. Unter Aufrechterhaltung der Temperatur von 78 °C und des pH-Wertes von 8,5 werden innerhalb von 20 min. 1,18 l Wasserglas und 0,28 l 50 %ige Schwefelsäure unter ständigem Rühren zugegeben. Anschließend wird die Zugabe von Wasserglas und Säure für 60 min. gestoppt. Danach werden Wasserglaslösung und Schwefelsäure weiter hinzugegeben, bis nach 138 min. ein Feststoffgehalt von 75 g/l erreicht ist.
Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeittrocknung unterworfen und gegebenenfalls vermahlen.
Die erhaltene Fällungskieselsäure hat eine $N_2$-Oberfläche von 127 $m^2$/g, eine CTAB-Oberfläche von 120 $m^2$/g, eine DBP-Zahl von 252 ml/100 g und eine Searszahl von 10,5.

Beispiel 2

Herstellung einer Fällungskieselsäure im $N_2$-Oberflächenbereich von 140 - 160 $m^2$/g

In einem Bottich werden unter Rühren 45,5 $m^3$ Wasser auf 95 °C erwärmt. Unter Aufrechterhaltung der Temperatur von 95 °C werden bei einem pH-Wert von 7,5 innerhalb von 48 min. soviel Natronwasserglas (Modul 1,342, Dichte 1,348) und 96 %ige Schwefelsäure unter ständigem Rühren zugegeben, so daß nach 48 min. ein Feststoffgehalt von 56 g/l erreicht ist. Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeittrocknung unterworfen und gegebenenfalls vermahlen.
Die erhaltene Fällungskieselsäure hat eine $N_2$-Oberfläche von 141 $m^2$/g, eine CTAB-Oberfläche von 121 $m^2$/g, eine DBP-Zahl von 288 ml/100 g und eine Searszahl von 7,5.

Beispiel 3

Herstellung einer Fällungskieselsäure im $N_2$-Oberflächenbereich von 160 - 180 $m^2$/g

In einem Bottich werden unter Rühren 20,6 l Wasser mit Natronwasserglas (Modul 3,42, Dichte 1,350), bis pH 8,5 erreicht wird, vermischt und auf 62 °C erwärmt. Unter Aufrechterhaltung der Temperatur von 62 °C und des pH-Wertes von 8,5 werden innerhalb von 158 min. 5,6 l Wasserglas und 1,3 l 50 %ige Schwefelsäure unter ständigem Rühren zugegeben, so daß nach 158 min. ein Feststoffgehalt von 76 g/l erreicht ist. Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeittrocknung unterworfen und gegebenenfalls vermahlen.
Die erhaltene Fällungskieselsäure hat eine $N_2$-Oberfläche von 171 $m^2$/g, eine CTAB-Oberfläche von 139 $m^2$/g, eine DBP-Zahl von 275 ml/100 g und eine Searszahl von 17,6.

Beispiel 4

Herstellung einer Fällungskieselsäure im $N_2$-Oberflächenbereich von 180 - 200 $m^2/g$

In einem Bottich werden unter Rühren 46 $m^3$ Wasser mit Natronwasserglas (Modul 1,342, Dichte 1,348), bis pH 9 erreicht wird, vermischt und auf 80 °C erwärmt. Unter Aufrechterhaltung der Temperatur von 80 °C werden bei einem pH-Wert von 9,0 innerhalb von 67 min. soviel Natronwasserglas und 96 %ige Schwefelsäure unter ständigem Rühren zugegeben, so daß nach 67 min. ein Feststoffgehalt von 89 g/l erreicht ist. Danach wird die Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeittrocknung unterworfen und gegebenenfalls vermahlen.
Die erhaltene Fällungskieselsäure hat eine $N_2$-Oberfläche von 185 $m^2/g$, eine CTAB-Oberfläche von 163 $m^2/g$, eine DBP-Zahl von 269 ml/100 g und eine Searszahl von 17,0.

Beispiel 5

Herstellung einer Fällungskieselsäure im $N_2$-Oberflächenbereich von 200 - 300 $m^2/g$

In einem Bottich werden unter Rühren 46 $m^3$ Wasser mit Natronwasserglas (Modul 1,342, Dichte 1,348), bis pH 9 erreicht wird, vermischt und auf 69 °C erwärmt. Unter Aufrechterhaltung der Temperatur von 69 °C werden bei einem pH-Wert von 9,0 innerhalb von 76 min. soviel Natronwasserglas und 96 %ige Schwefelsäure unter ständigem Rühren zugegeben, so daß nach 76 min. ein Feststoffgehalt von 96,5 g/l erreicht ist. Danach wird weitere Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeittrocknung unterworfen und gegebenenfalls vermahlen.
Die erhaltene Fällungskieselsäure hat eine $N_2$-Oberfläche von 218 $m^2/g$, eine CTAB-Oberfläche von 186 $m^2/g$, eine DBP-Zahl von 299 ml/100 g und eine Searszahl von 21,6.

Beispiel 6

Bestimmung des wk-Koeffizienten mit dem Cilas Granulometer 1064 L an einer erfindungsgemäßen Kieselsäure mit einer CTAB-Oberfläche von 120 $m^2/g$ und Vergleich mit Standardkieselsäuren im selben Oberflächenbereich. Zusätzlich sind angegeben die Werte B, A, B' und A' gemäß Grafik 1.

| Produktname | CTAB-Oberfläche | wk-Koeffizient | B | A | B'[μm] | A'[μm] |
|---|---|---|---|---|---|---|
| KS 300 | 120 | 9,3 | 28 | 3 | 13,9 | 0,5 |
| VN 2 | 120 | 15,3 | 29 | 1,9 | 12 | 0,4 |
| KS Bsp. 1 | 120 | 1,2 | 38 | 32 | 5,0 | 0,75 |

Beispiel 7

Bestimmung des wk-Koeffizienten mit dem Cilas Granulometer 1064 L an einer erfindungsgemäßen Kieselsäure mit einer CTAB-Oberfläche im Bereich von 130 - 150 $m^2/g$ und Vergleich mit Standardkieselsäuren im selben Oberflächenbereich. Zusätzlich sind angegeben die Werte B, A, B' und A' gemäß Grafik 1.

| Produktname | CTAB-Oberfläche | wk-Koeffizient | B | A | B'[μm] | A'[μm] |
|---|---|---|---|---|---|---|
| Hisil 233 | 138 | 13,3 | 32 | 2,4 | 14,9 | 0,5 |
| KS Bsp. 2 | 139 | 1,3 | 41 | 31,2 | 4,5 | 0,7 |

Beispiel 8

Bestimmung des wk-Koeffizienten mit dem Cilas Granulometer 1064 L an einer erfindungsgemäßen Kieselsäure mit einer CTAB-Oberfläche im Bereich von 150 - 180 $m^2/g$ und Vergleich mit Standardkieselsäuren im selben Oberflächenbereich.
Zusätzlich sind angegeben die Werte B, A, B' und A' gemäß Grafik 1.

| Produktname | CTAB-Oberfläche | wk-Koeffizient | B | A | B'[μm] | A'[μm] |
|---|---|---|---|---|---|---|
| VN 3 | 165 | 12,1 | 27,5 | 2,3 | 13 | 0,45 |
| 3370 | 165 | 14,5 | 40,5 | 2,8 | 14 | 0,65 |
| 3380 | 165 | 3,5 | 38,5 | 11,0 | 10 | 0,65 |
| 1165 MP | 160 | 3,4 | 38,7 | 11,4 | 8,5 | 0,6 |
| KS 404 | 160 | 18,3 | 33 | 1,8 | 16 | 0,6 |
| KS 408 | 160 | 12,9 | 27 | 2,1 | 14 | 0,6 |
| KS Bsp. 3 | 163 | 1,2 | 33 | 27,5 | 5 | 0,4 |
| KS Bsp. 4 | 163 | 1,1 | 31 | 27,5 | 4,1 | 0,5 |
| KS Bsp. 5 | 186 | 2,1 | 38 | 18 | 8,3 | 0,5 |

Die in der Tabelle aufgeführte Fällungskieselsäure 3370 entspricht der Fällungskieselsäure gemäß EP-A 0 647 591, Beispiel 3. Sie weist gegenüber der erfindungsgemäßen Fällungskieselsäure einen wesentlich schlechteren WK-Koeffizienten auf. Weiterhin ist der Phillips-Wert - wie dem Beispiel 10 entnommen werden kann - deutlich schlechter. Das bedeutet: Die erfindungsgemäße Fällungskieselsäure weist eine deutlich bessere Dispergierbarkeit und damit einen niedrigeren Abrieb in der Reifenmischung auf.

Beispiel 9

Meßergebnisse der erfindungsgemäßen Fällungskieselsäure nach Beispiel x und x im Vergleich zu Standardkieselsäuren (siehe Figuren 1 - 4 im Anhang).

Beispiel 10

Erfindungsgemäße Kieselsäure nach Beispiel 4 im Vergleich zu Standardkieselsäuren in L-SBR/BR Laufflächen-Mischungen:

| | 1 | 2 | 3 |
|---|---|---|---|
| Buna VSL 5025-1 | 96 | 96 | 96 |
| Buna CB 24 | 30 | 30 | 30 |
| Ultrasil VN3 | 80 | - | - |
| Ultrasil 3370 | - | 80 | - |
| Erfindungsgemäße Kieselsäure (Beispiel 4) | - | - | 80 |
| X 50 S | 12,8 | 12,8 | 12,8 |
| ZnO RS | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protektor G 35 | 1 | 1 | 1 |
| CBS | 1,5 | 1,5 | 1,5 |
| DPG | 2 | 2 | 2 |
| TBZTD | 0,2 | 0,2 | 0,2 |
| Schwefel | 1,5 | 1,5 | 1,5 |
| Mooney-Viskosität ML (1+4) | 78 | 78 | 75 |
| Vulkanisatdaten: 165 C/$t_{95}$ % | | | |
| Bruchdehnung [%] | 380 | 350 | 400 |
| tanδ 0 °C | 0,427 | 0,428 | 0,437 |
| tanδ 60 °C | 0,132 | 0,133 | 0,129 |

(fortgesetzt)

| | 1 | 2 | 3 |
|---|---|---|---|
| Vulkanisatdaten: 165 C/$t_{95}$ % | | | |
| Dispersionskoeffizient [%] | 61,6 | 82,7 | 97,7 |
| Phillips-Wert | 4 | 6 | 9 |

Die erfindungsgemäße Kieselsäure gemäß Beispiel 4 besitzt niedrigere Viskosität, höhere Bruchdehnung, höhere Naßrutschfestigkeit bei niedrigem Rollwiderstand und besonders wichtig, höherem Dispersionskoeffizienten sowohl gegenüber Ultrasil VN3 als auch Ultrasil 3370. Ultrasil 3370 wird beschrieben in dem Dokument EP-A 0 647 591, Beispiel 3. Ein höherer Dispersionskoeffizient bedeutet einen geringeren Abrieb, und ein geringerer Abrieb bedeutet eine höhere Lebensdauer der Reifen.

Beispiel 11

Erfindungsgemäße Kieselsäure nach Beispiel 1 im Vergleich zu Standardkieselsäure in einer NR/SBR-Mischung für den Reifenunterbau:

| | 1 | 2 |
|---|---|---|
| SMR 20 | 60 | 60 |
| Krynol 1712 | 55 | 55 |
| Ultrasil VN2 | 50 | - |
| Erfindungsgemäße Kieselsäure (Beispiel 1) | - | 50 |
| X 50 S | 3 | 3 |
| ZnO RS | 3 | 3 |
| Stearinsäure | 1 | 1 |
| Sunpar 150 | 6 | 6 |
| Koresin (Pastillen) | 4 | 4 |
| DPG | 1,5 | 1,5 |
| CBS | 1,5 | 1,5 |
| Schwefel | 2,2 | 2,2 |
| Mooney-Viskosität ML (1+4) | 38 | 34 |
| Vulkanisatdaten: 160 C/$t_{95}$ % | | |
| Modul 300 % [MPa] | 5,5 | 6,0 |
| Bruchdehnung [%] | 490 | 570 |
| Heat Build Up DT Center [°C] | 65 | 56 |
| Dispersionskoeffizient [%] | 78,1 | 96,7 |
| Phillips-Wert | 6 | 9 |

Die erfindungsgemäße Kieselsäure gemäß Beispiel 1 führt gegenüber dem in der Oberfläche ähnlichem Ultrasil VN2 zu niedrigeren Viskositäten, höheren Modulwerten, höherer Bruchdehnung, niedrigerem Hitzeaufbau und höherem Dispersionskoeffizienten.

Es beschreiben:

Figur 1 - Ergebnis der Messung von Ultrasil 3380 mit der Laserbeugungsmethode

Figur 2 - Ergebnis der Messung von erfindungsgemäßer Kieselsäure nach Beispiel 3 mit der Laserbeugungsmethode

Figur 3 - Ergebnis der Messung von Ultrasil VN 3 mit der Laserbeugungsmethode

Figur 4 - Ergebnis der Messung von Zeosil 1165 MP mit der Laserbeugungsmethode

Figur 5 - Ergebnis der Messung von Perkasil KS 408 mit der Laserbeugungsmethode

Figur 6 - Die graphische Darstellung zum wk-Koeffizienten

**Patentansprüche**

**1.** Fällungskieselsäure **gekennzeichnet durch** folgende physikalisch-chemische Parameter:

| | |
|---|---|
| BET-Oberfläche | 120 - 300 $m^2/g$ |
| CTAB-Oberfläche | 100 - 300 $m^2/g$ |
| Verhältnis BET/CTAB | 0,8 - 1,3 |
| Searszahl (Verbrauch 0,1 n NaOH) | 6 - 25 ml |
| DBP-Zahl | 150 - 300 g/100 g |
| wk-Koeffizient (wie in der Beschreibung definiert) | < 3,4 |
| Partikelgröße der abgebauten Partikel (wie in der Beschreibung definiert) | < 1,0 µm |
| Partikelgröße der nicht abbaubaren Partikel (wie in der Beschreibung definiert) | 1,0 - 100 µm |

**2.** Verfahren zur Herstellung der Fällungskieselsäure mit folgenden physikalisch-chemischen Parametern:

| | |
|---|---|
| BET-Oberfläche | 120 - 300 $m^2/g$ |
| CTAB-Oberfläche | 100 - 300 $m^2/g$ |
| Verhältnis BET/CTAB | 0,8 - 1,3 |
| Searszahl (Verbrauch 0,1 n NaOH) | 6 - 25 ml |
| DBP-Zahl | 150 - 300 g/100 g |
| wk-Koeffizient (wie in der Beschreibung definiert) | < 3,4 |
| Partikelgröße der abgebauten Partikel (wie in der Beschreibung definiert) | < 1,0 µm |
| Partikelgröße der nicht abbaubaren Partikel (wie in der Beschreibung definiert) | 1,0 - 100 µm |

**dadurch gekennzeichnet, daß** man Alkalisilikat (vorzugsweise Natronwasserglas)mit Mineralsäuren (vorzugsweise Schwefelsäure) bei Temperaturen von 60 - 95°C bei einem pH-Wert von 7,0 - 11,0 unter kontinuierlichem Rühren umsetzt, die Umsetzung bis zu einer Feststoffkonzentration von 40 g - 110 g fortsetzt, der pH-Wert auf einen Wert zwischen 3 und 5 eingestellt, die Fällungskieselsäure abfiltriert, gewäscht und anschließend getrocknet gegebenenfalls vermahlt oder granuliert, wobei man für die Herstellung einer Fällungskieselsäure mit einer BET-Oberfläche von 120 bis 140 $m^2/g$ und einem WK-Koeffizienten von kleiner 3,4 die folgenden Bedingungen einhält:

| | |
|---|---|
| Feststoffkonzentration | 68 bis 85 g/l |
| Temperatur | 74 bis 82 °C |
| pH-Wert | 8 bis 9, vorzugsweise 8,5 |

1. Zugabe von Wasserglas und Schwefelsäure während 15 bis 25 Minuten,

2. Unterbrechung der Zugabe von 30 bis 90 Minuten,

3. Zugabe von Wasserglas und Schwefelsäure während 50 bis 70 Minuten,

wobei die Gesamtfällzeit 130 bis 140 Minuten beträgt oder für die Herstellung einer Fällungskieselsäure mit einer BET-Oberfläche von 140 bis 160 $m^2/g$ und einem WK-Koeffizienten von kleiner 3,4 die folgenden Bedingungen einhält:

| | |
|---|---|
| Feststoffkonzentration | 40 bis 60 g/l |
| Temperatur | 88 bis 95 °C |
| pH-Wert | 7 bis 9 |

Zugabe von Wasserglas und Schwefelsäure während 38 bis 50 Minuten oder man für die Herstellung einer Fällungskieselsäure mit einer BET-Oberfläche von 160 bis 180 $m^2/g$ und einem WK-Koeffizienten von kleiner 3,4 die folgenden Bedingungen einhält:

| | |
|---|---|
| Feststoffkonzentration | 68 bis 84 g/l |
| Temperatur | 59 bis 65 °C |
| pH-Wert | 8 bis 9 |

Zugabe von Wasserglas und Schwefelsäure während 150 bis 170 Minuten oder für die Herstellung einer Fällungskieselsäure mit einer BET-Oberfläche von 180 bis 200 $m^2/g$ und einem WK-Koeffizienten von kleiner 3,4 die folgenden Bedingungen einhält:

| | |
|---|---|
| Feststoffkonzentration: | 74 bis 94 g/l |
| Temperatur: | 75 bis 83 °C |
| pH-Wert | 8 bis 10 |

Zugabe von Wasserglas und Schwefelsäure während 60 bis 70 Minuten oder für die Herstellung einer Fällungskieselsäure mit einer BET-Oberfläche von 200 bis 300 $m^2/g$, vorzugsweise 200 bis 240 $m^2/g$, und einem WK-Koeffizienten von kleiner 3,4 die folgenden Bedingungen einhält:

| | |
|---|---|
| Feststoffkonzentration | 70 bis 110 g/l |
| Temperatur: | 60 bis 76 °C |
| pH-Wert | 8 bis 10 |

Zugabe von Wasserglas und Schwefelsäure während 60 bis 86 Minuten.

3. Verfahren gemäß den Anspruch 2, **dadurch gekennzeichnet, daß** man zur Filtration Kammerfilterpressen oder Membranfilterpressen oder Bandfilter oder Drehfilter oder Membranfilterpressautomaten oder zwei der Filter in Kombination einsetzt.

4. Verfahren gemäß den Anspruch 2, **dadurch gekennzeichnet, daß** man zur Trocknung einen Stromtrockner, Etagentrockner, Flash-Trockner, Spin-Flash-Trockner oder ähnliche Einrichtungen einsetzt.

5. Verfahren gemäß den Anspruch 2, **dadurch gekennzeichnet, daß** man verflüssigten Filterkuchen in einem Sprühtrockner mit Atomizer oder Zweistoffdüse oder Einstoffdüse und/oder integriertem Fließbett trocknet.

6. Verfahren gemäß den Anspruch 2, **dadurch gekennzeichnet, daß** man zur Granulation Walzenkompaktor einsetzt.

7. Fällungskieselsäuren nach Anspruch 1, **dadurch gekennzeichnet, daß** ihre Oberflächen mit Organosilanen der Formel I bis III

$$[R^1_n\text{-}(RO)_{3-n}Si\text{-}(Alk)_m\text{-}(Ar)_p]_q[B] \quad (I),$$

$$R^1_n(RO)_{3-n}Si\text{-}(Alkyl) \quad (II),$$

oder

$$R^1_n(RO)_{3-n}Si\text{- (Alkenyl)} \qquad (III),$$

modifiziert sind, in denen bedeuten

| | |
|---|---|
| B: | -SCN, -SH, -Cl, $-NH_2$ (wenn q = 1) oder -Sx- (wenn q = 2), |
| R und $R^1$: | eine Alkylgruppe mit 1 bis 4 Kohlenstoffatomen, den Phenylrest, wobei alle Reste R und $R^1$ jeweils die gleicher oder eine verschiedene Bedeutung haben können, |
| R: | eine $C_1$-$C_4$-Alkyl, $C_1$-$C_4$-Alkoxygruppe, |
| n: | 0; 1 oder 2, |
| Alk: | einen zweiwertigen geraden oder verzweigten Kohlenwasserstoffrest mit 1 bis 6 Kohlenstoffatomen, |
| m: | 0 oder 1, |
| Ar: | einen Arylenrest mit 6 bis 12 C-Atomen, bevorzugt 6 C-Atome, |
| p: | 0 oder 1 mit der Maßgabe, daß p und n nicht gleichzeitig 0 |

bedeuten,

| | |
|---|---|
| x: | eine Zahl von 2 bis 8, |
| Alkyl: | einen einwertigen geraden oder verzweigten ungesättigten Kohlenwasserstoffrest mit 1 bis 20 Kohlenstoffatomen, bevorzugt 2 bis 8 Kohlenstoffatomen, |
| Alkenyl: | einen einwertigen geraden oder verzweigten ungesättigten Kohlenwasserstoffrest mit 2 bis 20 Kohlenstoffatomen, bevorzugt 2 bis 8 Kohlenstoffatomen. |

**8.** Verfahren zur Herstellung der Kieselsäuren gemäß Anspruch 7, **dadurch gekennzeichnet, daß** man die Fällungskieselsäuren mit Organosilanen in Mischungen von 0,5 bis 50 Teilen, bezogen auf 100 Teile Fällungskieselsäure, insbesondere 2 bis 15 Teile, bezogen auf 100 Teile Fällungskieselsäure modifiziert, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

**9.** Vulkanisierbare Kautschukmischungen und Vulkanisate, die die Fällungskieselsäure gemäß Anspruch 1 mit folgenden physikalisch-chemischen Parametern

| | |
|---|---|
| BET-Oberfläche | 120 - 300 $m^2/g$ |
| CTAB-Oberfläche | 100 - 300 $m^2/g$ |
| Verhältnis BET/CTAB | 0,8 - 1,3 |
| Searszahl (Verbrauch 0,1 n NaOH) | 6 - 25 ml |
| DBP-Zahl | 150 - 300 g/100 g |
| wk-Koeffizient | < 3,4 |
| Partikelgröße der abgebauten Partikel | < 1,0 µm |
| Partikelgröße der nicht abbaubaren Partikel | 1,0 - 100 µm |

als Füllstoff enthalten.

## Claims

**1.** Precipitated silica, **characterized by** the following physico-chemical parameters:

| | |
|---|---|
| BET surface area | 120 - 300 $m^2/g$ |
| CTAB surface area | 100 - 300 $m^2/g$ |
| BET/CTAB ratio | 0.8 - 1.3 |
| Sears index (consumption of 0.1 N NaOH) | 6 - 25 ml |

(continued)

| | |
|---|---|
| DBP index | 150 - 300 g/100 g |
| wk coefficient (as defined in the description) | < 3.4 |
| Particle size of the degraded particles (as defined in the description) | < 1.0 μm |
| Particle size of the non-degradable particles (as defined in the description) | 1.0 - 100 μm |

**2.** Process for the preparation of the precipitated silica having the following physico-chemical parameters:

| | |
|---|---|
| BET surface area | 120 - 300 $m^2/g$ |
| CTAB surface area | 100 - 300 $m^2/g$ |
| BET/CTAB ratio | 0.8 - 1.3 |
| Sears index (consumption of 0.1 N NaOH) | 6 - 25 ml |
| DBP index | 150 - 300 g/100 g |
| wk coefficient (as defined in the description) | < 3.4 |
| Particle size of the degraded particles (as defined in the description) | < 1.0 μm |
| Particle size of the non-degradable particles (as defined in the description) | 1.0 - 100 μm |

**characterized in that** an alkali metal silicate (preferably soda water-glass) is reacted with mineral acids (preferably sulfuric acid) at temperatures of 60 - 95°C at a pH of 7.0 - 11.0 with continuous stirring, the reaction is continued up to a solids concentration of 40 g - 110 g, the pH is adjusted to a value between 3 and 5, and the precipitated silica is filtered off, washed and then dried, and if appropriate ground or granulated, wherein
the following conditions are maintained for the preparation of a precipitated silica having a BET surface area of 120 to 140 $m^2/g$ and a WK coefficient of less than 3.4:

| | |
|---|---|
| Solids concentration | 68 to 85 g/l |
| Temperature | 74 to 82 °C |
| pH | 8 to 9, preferably 8.5 |

1. Addition of water-glass and sulfuric acid over a period of 15 to 25 minutes,

2. Interruption of the addition for 30 to 90 minutes,

3. Addition of water-glass and sulfuric acid over a period of 50 to 70 minutes,

where the total precipitation time is 130 to 140 minutes or
the following conditions are maintained for the preparation of a precipitated silica having a BET surface area of 140 to 160 $m^2/g$ and a WK coefficient of less than 3.4:

| | |
|---|---|
| Solids concentration | 40 to 60 g/l |
| Temperature | 88 to 95 °C |
| pH | 7 to 9 |

Addition of water-glass and sulfuric acid over a period of 38 to 50 minutes or
the following conditions are maintained for the preparation of a precipitated silica having a BET surface area of 160 to 180 $m^2/g$ and a WK coefficient of less than 3.4:

| | |
|---|---|
| Solids concentration | 68 to 84 g/l |
| Temperature | 59 to 65 °C |
| pH | 8 to 9 |

Addition of water-glass and sulfuric acid over a period of 150 to 170 minutes or
the following conditions are maintained for the preparation of a precipitated silica having a BET surface area of 180 to 200 $m^2/g$ and a WK coefficient of less than 3.4:

| | |
|---|---|
| Solids concentration | 74 to 94 g/l |
| Temperature | 75 to 83 °C |
| pH | 8 to 10 |

Addition of water-glass and sulfuric acid over a period of 60 to 70 minutes or
the following conditions are maintained for the preparation of a precipitated silica having a BET surface area of 200 to 300 $m^2/g$, preferably 200 to 240 $m^2/g$ and a WK coefficient of less than 3.4:

| | |
|---|---|
| Solids concentration | 70 to 110 g/l |
| Temperature | 60 to 76 °C |
| pH | 8 to 10 |

Addition of water-glass and sulfuric acid over a period of 60 to 86 minutes.

3. Process according to claim 2, **characterized in that** chamber filter presses or membrane filter presses or belt filters or rotary filters or automatic membrane filter presses or two of the filters in combination are employed for the filtration.

4. Process according to claim 2, **characterized in that** a flow dryer, rack dryer, flash dryer, spin-flash dryer or similar equipment is employed for the drying.

5. Process according to claim 2, **characterized in that** liquefied filter cakes are dried in a spray dryer with an atomizer or two-component nozzle or one-component nozzle and/or integrated fluidized bed.

6. Process according to claim 2, **characterized in that** a roller compactor is employed for the granulation.

7. Precipitated silicas according to claim 1, **characterized in that** their surfaces are modified with organosilanes of the formula I to III

$$[R^1{}_n\text{-}(RO)_{3-n}Si\text{-}(Alk)_m\text{-}(Ar)_p]_q[B] \quad (I),$$

$$R^1{}_n(RO)_{3-n}Si\text{-}(alkyl) \quad (II),$$

or

$$R^1{}_n(RO)_{3-n}Si\text{-}(alkenyl) \quad (III),$$

in which the symbols denote

B: -SCN, -SH, -Cl, $-NH_2$ (if q = 1) or -Sx- (if q = 2),
R and $R^1$: an alkyl group having 1 to 4 carbon atoms, the phenyl radical, wherein all the radicals R and $R^1$ can each have the same or a different meaning,
R: a $C_1$-$C_4$-alkyl, $C_1$-$C_4$-alkoxy group,
n: 0; 1 or 2,
Alk: a divalent straight-chain or branched hydrocarbon radical having 1 to 6 carbon atoms,
m: 0 or 1,
Ar: an arylene radical having 6 to 12 C atoms, preferably 6 C atoms,
p: 0 or 1, with the proviso that p and n do not simultaneously denote 0
x: a number from 2 to 8,
alkyl: a monovalent straight-chain or branched unsaturated hydrocarbon radical having 1 to 20 carbon atoms, preferably 2 to 8 carbon atoms,
alkenyl: a monovalent straight-chain or branched unsaturated hydrocarbon radical having 2 to 20 carbon

atoms, preferably 2 to 8 carbon atoms.

8. Process for the preparation of the silicas according to claim 7, **characterized in that** the precipitated silicas are modified with organosilanes in mixtures of 0.5 to 50 parts, based on 100 parts of precipitated silica, in particular 2 to 15 parts, based on 100 parts of precipitated silica, the reaction between the precipitated silica and organosilane being carried out during the preparation of the mixture (in situ) or externally by spraying on and subsequent heat treatment of the mixture, or by mixing the silane and the silica suspension with subsequent drying and heat treatment.

9. Vulcanizable rubber mixtures and vulcanisates which comprise, as a filler, the precipitated filler according to claim 1 with the following physico-chemical parameters

| | |
|---|---|
| BET surface area | 120 - 300 $m^2/g$ |
| CTAB surface area | 100 - 300 $m^2/g$ |
| BET/CTAB ratio | 0.8 - 1.3 |
| Sears index (consumption of 0.1 N NaOH) | 6 - 25 ml |
| DBP index | 150 - 300 g/100 g |
| wk coefficient | < 3.4 |
| Particle size of the degraded particles | < 1.0 µm |
| Particle size of the non-degradable particles | 1.0 - 100 µm |

**Revendications**

1. Acide silicique de précipitation,
**caractérisé par**
les paramètres physico-chimiques suivants :

| | |
|---|---|
| Surface BET | 120 - 300 $m^2/g$ |
| Surface CTAB | 100 - 300 $m^2/g$ |
| Rapport BET/CTAB | 0,8 - 1,3 |
| Indice de Sears (consommation 0,1 n NaOH) | 6 - 25 ml |
| Indice DBP | 150 - 300 g/100 g |
| Coefficient WK (défini comme dans la description) | < 3,4 |
| Taille de particules des particules dégradées (défini comme dans la description) | < 1,0 µm |
| Taille de particules des particules non dégradées (défini comme dans la description) | 1,0 - 100 µm |

2. Procédé de production de l'acide silicique de précipitation ayant les paramètres physico-chimiques suivants :

| | |
|---|---|
| Surface BET | 120 - 300 $m^2/g$ |
| Surface CTAB | 100 - 300 $m^2/g$ |
| Rapport BET/CTAB | 0,8 - 1,3 |
| Indice de Sears (consommation 0,1 n NaOH) | 6 - 25 ml |
| Indice DBP | 150 - 300 g/100 g |
| Coefficient WK (défini comme dans la description) | < 3,4 |
| Taille de particules des particules dégradées (défini comme dans la description) | < 1,0 µm |
| Taille de particules des particules non dégradées (défini comme dans la description) | 1,0 - 100 µm |

**caractérisé en ce qu'**
on fait réagir un silicate de métal alcalin (de préférence le verre soluble sodique) avec des acides minéraux (de préférence de l'acide sulfurique) à des températures de 60-95°C à une valeur de pH de 7,0 à 11,0 tout en agitant, d'une manière continue, on poursuit la réaction jusqu'à une concentration en matières solides de 40-110 g, on ajuste la valeur du pH à une valeur comprise entre 3 et 5, on sépare par filtration l'acide silicique de précipitation, on le lave et ensuite on le sèche, le cas échéant on le broie ou on le granule,

pour la production d'un acide silicique de précipitation ayant une surface selon BET de 120 à 140 $m^2$/g et un coefficient WK inférieur à 3,4, on observe les conditions suivantes :

| | |
|---|---|
| Concentration en matières solides | 68 à 85 g/l |
| Température | 74 à 82°C |
| Valeur du pH | 8 à 9, de préférence 8,5 |

1. Ajout de verre soluble et d'acide sulfurique pendant 15 à 25 minutes,
2. Interruption de l'ajout de 30 à 90 minutes,
3. Ajout de verre soluble et d'acide sulfurique pendant 50 à 70 minutes,

pour lesquelles le temps de précipitation total s'élève à 130 à 140 minutes,
pour la production d'un acide silicique ayant une surface selon BET de 140 à 160 $m^2$/g et un coefficient WK inférieur à 3,4, on observe les conditions suivantes :

| | |
|---|---|
| Concentration en matières solides | 40 à 60 g/l |
| Température | 88 à 95°C |
| Valeur du pH | 7 à 9, |

Addition de verre soluble et d'acide sulfurique pendant 38 à 50 minutes, ou
pour la production d'un acide silicique de précipitation ayant une surface selon BET de 160 à 180 $m^2$/g et un coefficient WK inférieur à 3,4, on observe les conditions suivantes :

| | |
|---|---|
| Concentration en matières solides | 68 à 84 g/l |
| Température | 59 à 65°C |
| Valeur du pH | 8 à 9, |

addition de verre soluble et d'acide sulfurique pendant 150 à 170 minutes, ou
pour la production d'un acide silicique de précipitation ayant une surface selon BET de 180 à 200 $m^2$/g et un coefficient WK inférieur à 3,4, on observe les conditions suivantes :

| | |
|---|---|
| Concentration en matières solides | 74 à 94 g/l |
| Température | 75 à 83°C |
| Valeur du pH | 8 à 10 |

addition de verre soluble et d'acide sulfurique pendant 60 à 70 minutes, ou bien
pour la production d'un acide silicique de précipitation ayant une surface BET de 200 à 300 $m^2$/g, de préférence de 200 à 240 $m^2$/g et un coefficient WK inférieur à 3,4, on observe les conditions suivantes :

| | |
|---|---|
| Concentration en matières solides | 70 à 110 g/l |
| Température | 60 à 76°C |
| Valeur du pH | 8 à 10, |

addition de verre soluble et d'acide sulfurique pendant 60 à 86 minutes.

**3.** Procédé selon la revendication 2,
**caractérisé en ce qu'**
on met en oeuvre pour une filtration des presses à filtre à chambre ou des presses à filtre à membrane ou des filtres à bande passante ou des filtres à tambour ou deux des filtres en combinaison.

**4.** Procédé selon la revendication 2,
**caractérisé en ce qu'**
on met en oeuvre, pour le séchage, un séchoir à courant, un séchoir à étagères, un séchoir flash, un séchoir à rotation flash (spin-flash) ou des dispositifs similaires.

5. Procédé selon la revendication 2,
**caractérisé en ce qu'**
on sèche des gâteaux de filtre liquéfiés dans un séchoir à pulvérisation avec un atomiseur ou une buse à deux substances ou une buse à une substance et/ou un lit fluidifié intégré.

6. Procédé selon la revendication 2,
**caractérisé en ce qu'**
on met en oeuvre, pour la granulation, un compacteur à rouleaux.

7. Acides siliciques de précipitation selon la revendication 1,
**caractérisés en ce que**
leurs surfaces sont modifiées avec des organosilanes de formule I à III :

$$\left[R^1_n - (RO)_{3-n}Si - (Alk)_m - (Ar)_p\right]_q[B] \quad (I),$$

$$R^1_n(RO)_{3-n}Si - (Alkyl) \quad (II),$$

ou

$$R^1_n(RO)_{3-n}Si - (Alkényl) \quad (III),$$

dans lesquelles :

| | |
|---|---|
| B | signifie -SCN, -SH, -Cl, $-NH_2$ (quand q = 1) ou -Sx- (quand q = 2), |
| R et $R^1$ | signifient un groupe alkyle ayant de 1 à 4 atomes de carbone, le radical phényle, tous les radicaux R et $R^1$ respectivement pouvant avoir la même signification ou une signification différente, |
| R | signifie un $C_1$-$C_4$-Alkyle, un groupe alkoxy en $C_1$-$C_4$, |
| n | signifie 0 ; 1 ou 2, |
| Alk | signifie un radical hydrocarboné divalent linéaire ou ramifié avec 1 à 6 atomes de C, |
| m | signifie 0 ou 1, |
| Ar | signifie un radical arylène avec de 6 à 12 atomes de C, de préférence 6 atomes de C, |
| p | signifie 0 ou 1 avec la restriction que p et n ne signifient pas en même temps 0, |
| x | un nombre de 2 à 8, |
| Alkyl | signifie un radical hydrocarboné univalent linéaire ou ramifié non saturé avec 1 à 20 atomes de carbone, de préférence de 2 à 8 atomes de carbone, |
| Alkényl | signifie un radical hydrocarboné non saturé univalent linéaire ou ramifié ayant de 2 à 20 atomes de carbone, de préférence de 2 à 8 atomes de carbone. |

8. Procédé de production des acides siliciques selon la revendication 7,
**caractérisé en ce qu'**
on modifie les acides siliciques de précipitation avec des organosilanes dans des mélanges de 0,5 à 50 parties rapporté à 100 parties d'acide silicique de précipitation, en particulier de 2 à 15 parties rapporté à 100 parties d'acide silicique de précipitation, dans laquelle la réaction entre l'acide silicique de précipitation et l'organosilane pendant la production du mélange (in situ) ou en dehors, s'effectue par pulvérisation et ensuite recuit du mélange ou par mélange du silane et de la suspension d'acide silicique avec séchage et recuisson consécutifs.

9. Mélanges de caoutchouc vulcanisables et produits de vulcanisation qui renferment, en tant que substances de charge, les acides siliciques de précipitation conformément à la revendication 1, ayant les paramètres physico-chimiques suivants :

| | |
|---|---|
| Surface BET | 120 - 300 $m^2/g$ |

(suite)

| | |
|---|---|
| Surface CTAB | 100 - 300 $m^2/g$ |
| Rapport BET/CTAB | 0,8 - 1,3 |
| Indice de Sears (consommation 0,1 n NaOH) | 6 - 25 ml |
| Indice DBP | 150 - 300 g/100 g |
| Coefficient WK | < 3,4 |
| Taille de particules des particules dégradées | < 1,0 µm |
| Taille de particules des particules non dégradées | 1,0 - 100 µm. |

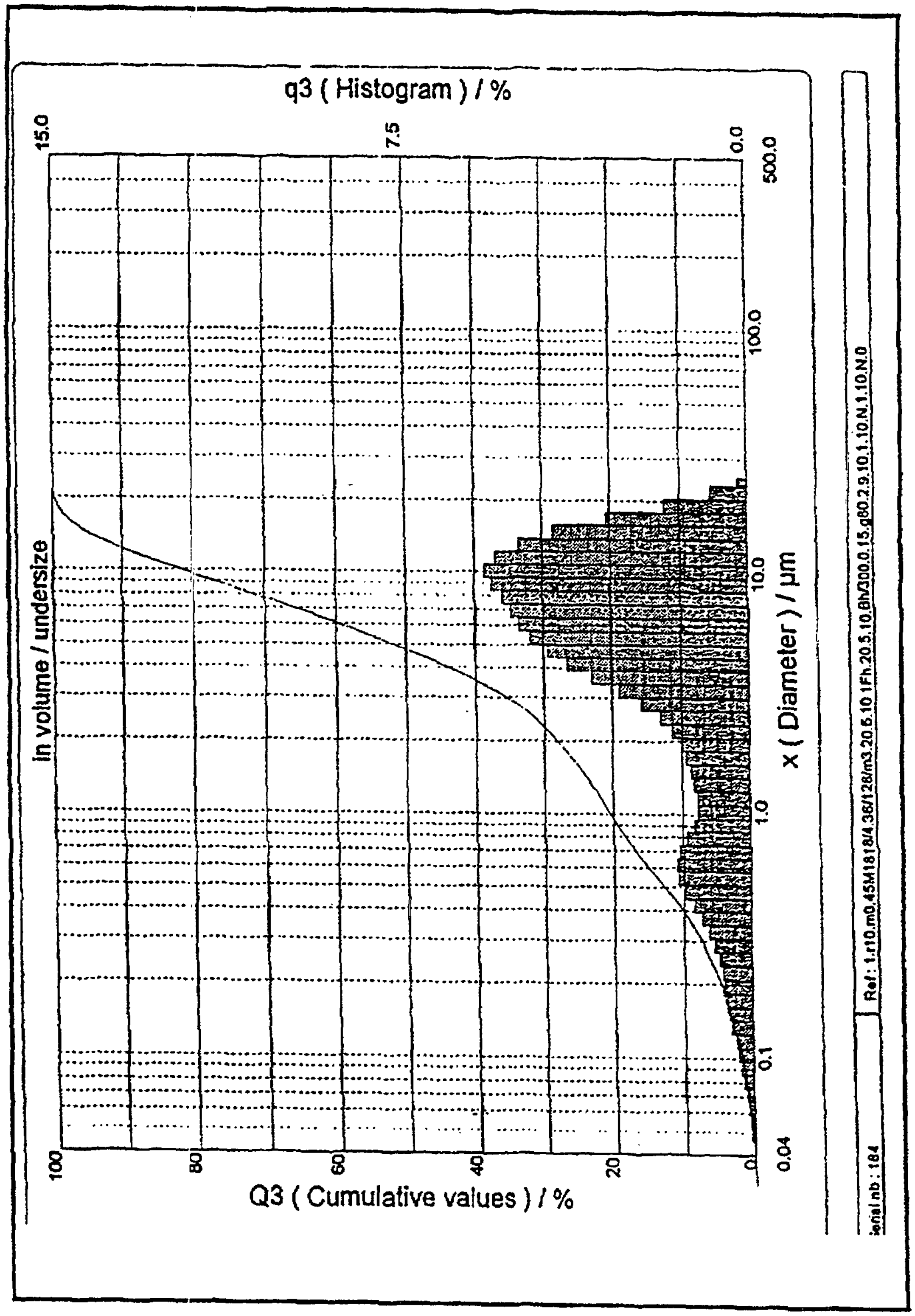
q3 ( Histogram ) / %
15.0
7.5
0.0
in volume / undersize
x ( Diameter ) / µm
500.0
100.0
10.0
1.0
0.1
0.04
Q3 ( Cumulative values ) / %
100
80
60
40
20
0

*Figur 1*

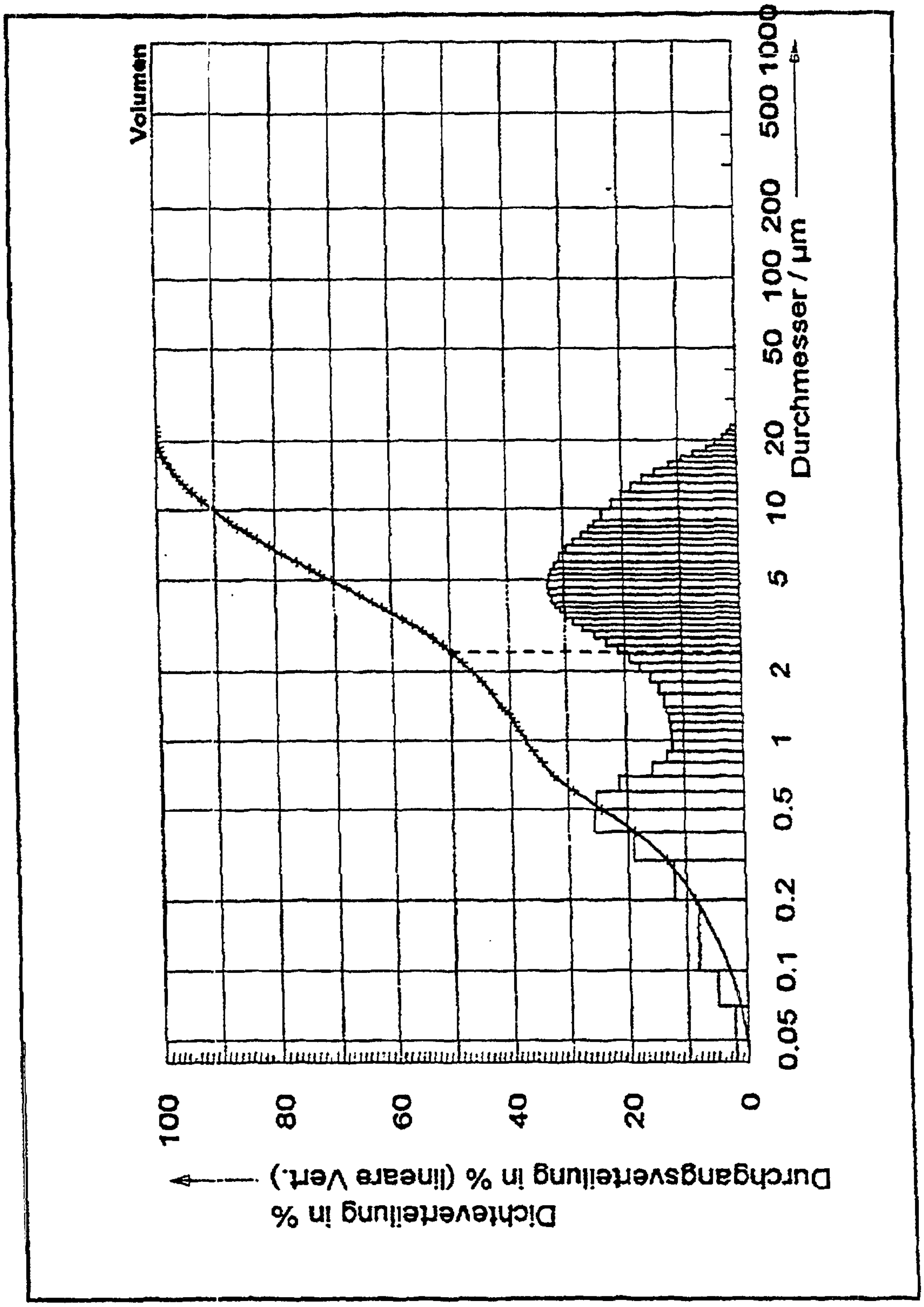
Volumen
0.05 0.1 0.2 0.5 1 2 5 10 20 50 100 200 500 1000
Durchmesser / µm
0 20 40 60 80 100
Durchgangsverteilung in % (lineare Vert.)
Dichteverteilung in %

*Figur 2*

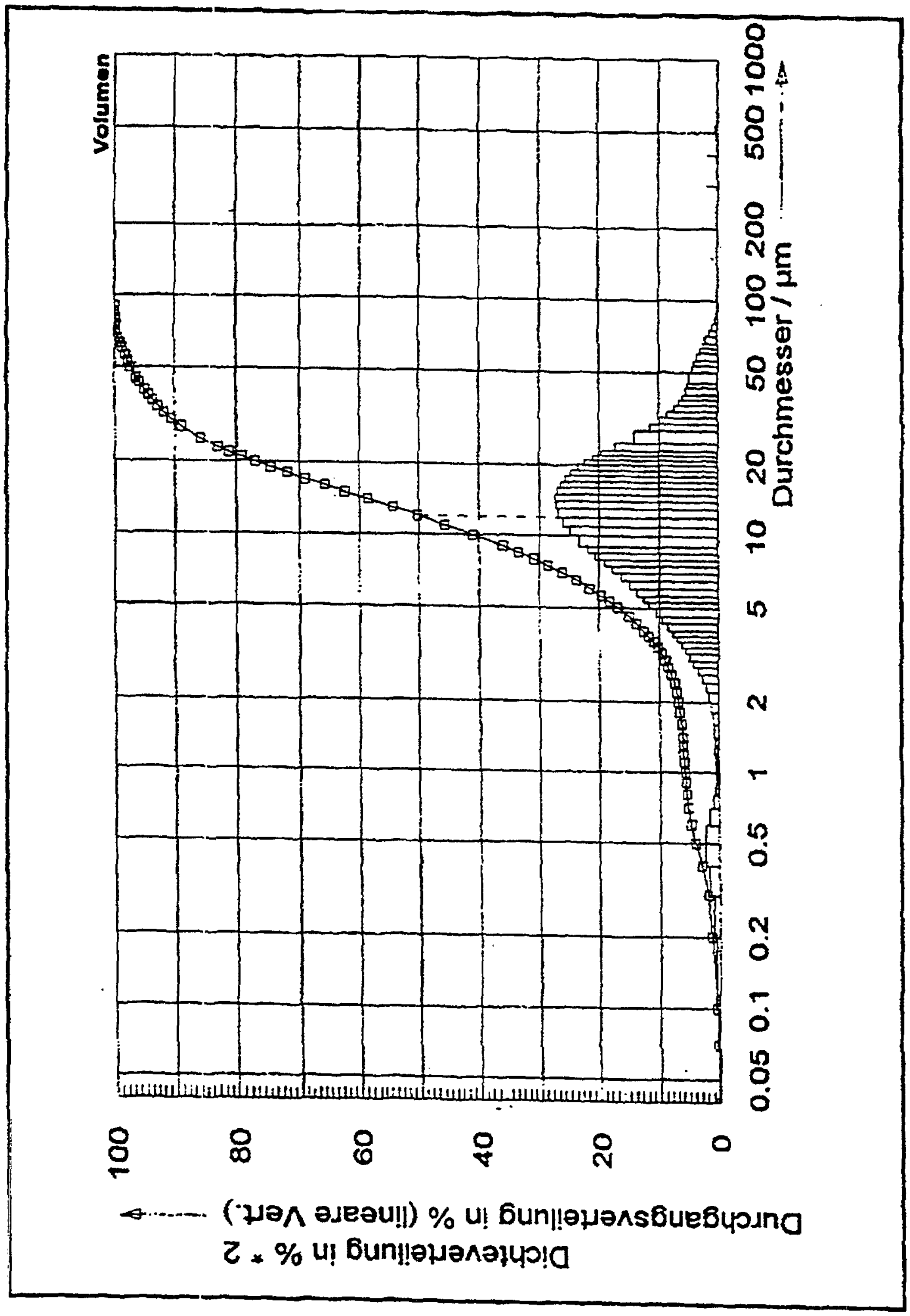
Volumen
0.05 0.1 0.2 0.5 1 2 5 10 20 50 100 200 500 1000
Durchmesser / µm
100 80 60 40 20 0
Durchgangsverteilung in % (lineare Vert.)
Dichteverteilung in % * 2

*Figur 3*

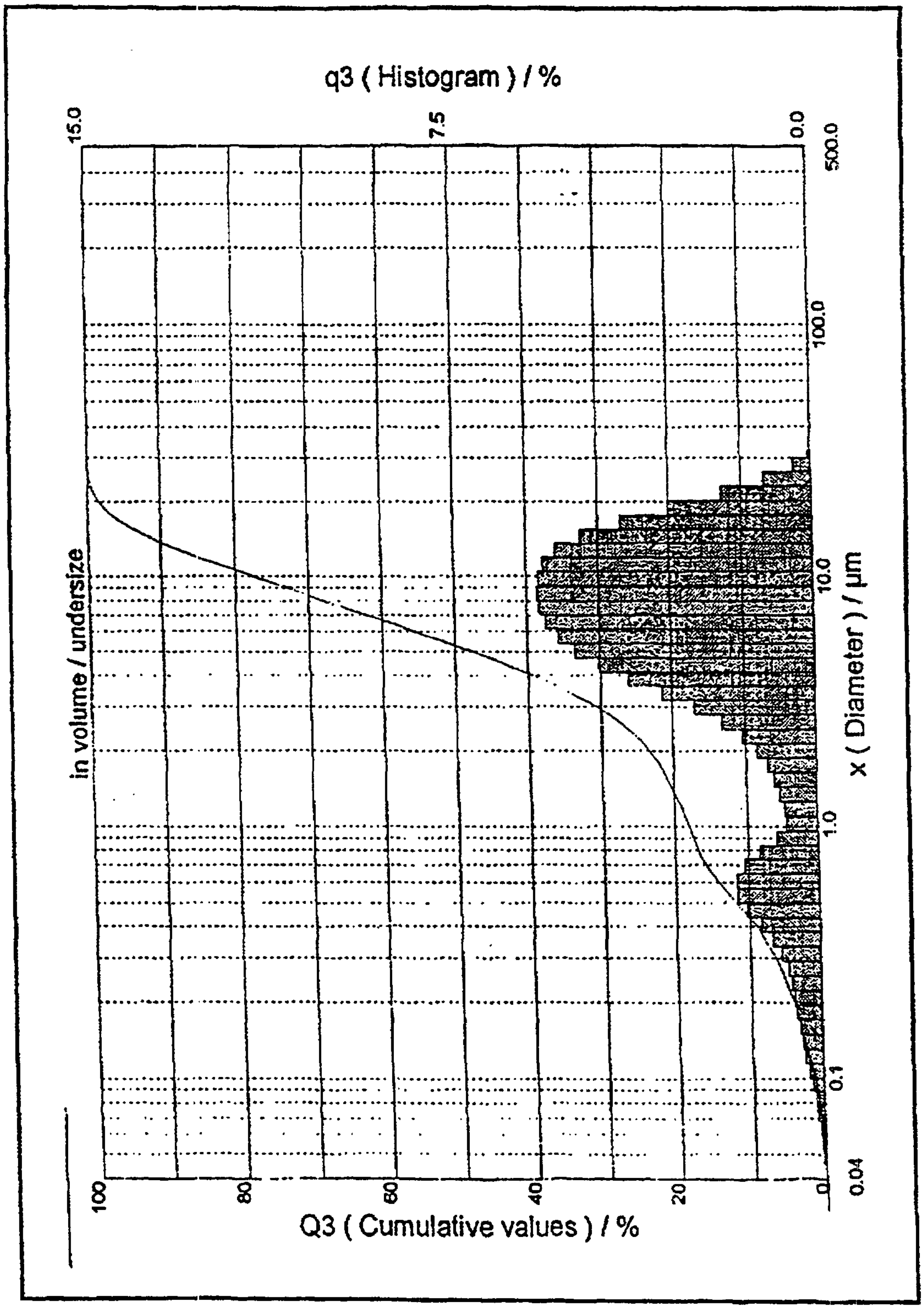
q3 ( Histogram ) / %
15.0
7.5
0.0
in volume / undersize
500.0
100.0
10.0
1.0
0.1
0.04
x ( Diameter ) / µm
100
80
60
40
20
0
Q3 ( Cumulative values ) / %

Figur 4

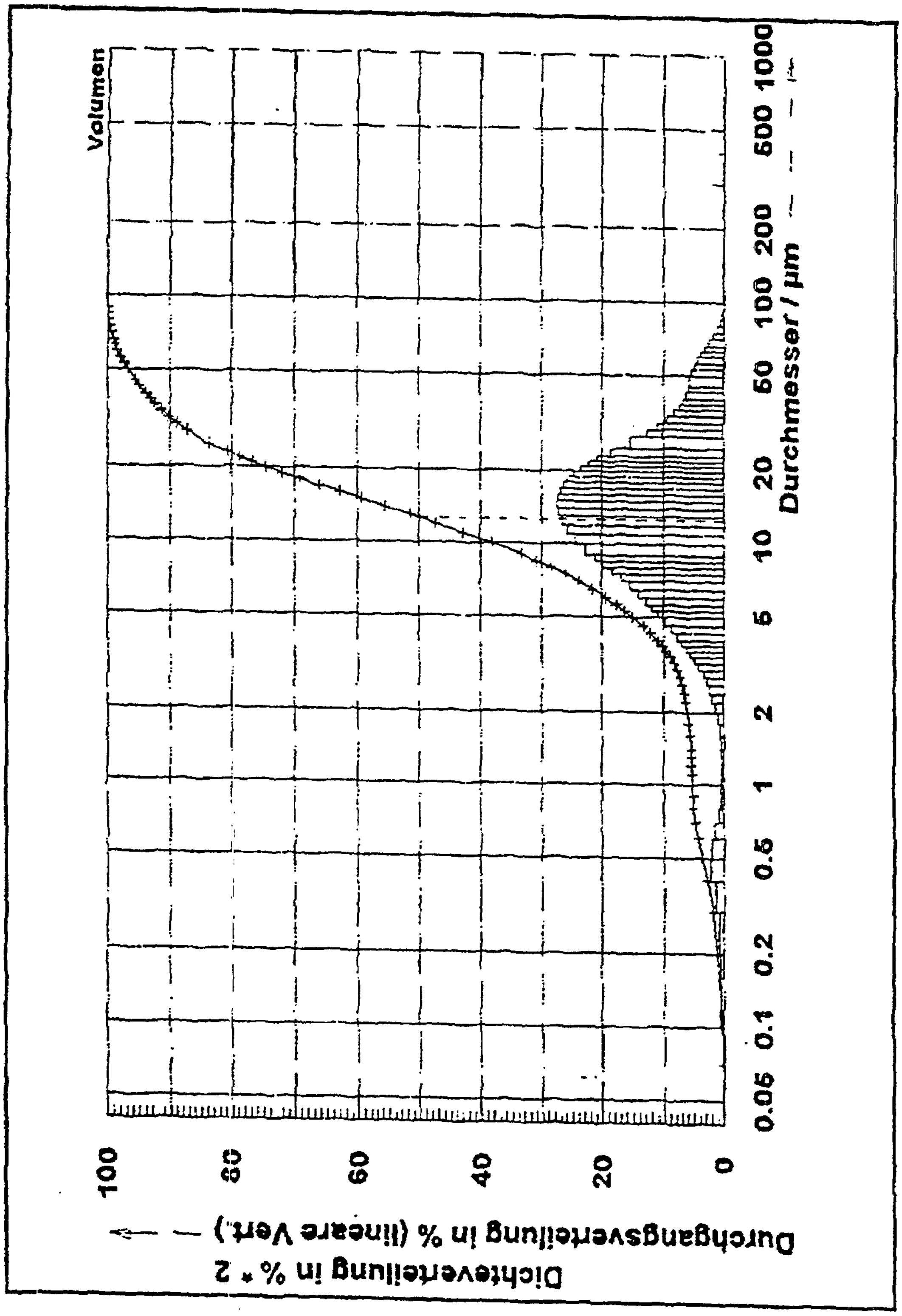
Volumen
100
80
60
40
20
0
0.05
0.1
0.2
0.5
1
2
5
10
20
50
100
200
500
1000
Durchmesser / µm
Durchgangsverteilung in % (lineare Vert.)
Dichteverteilung in % * 2

*Figur 5*

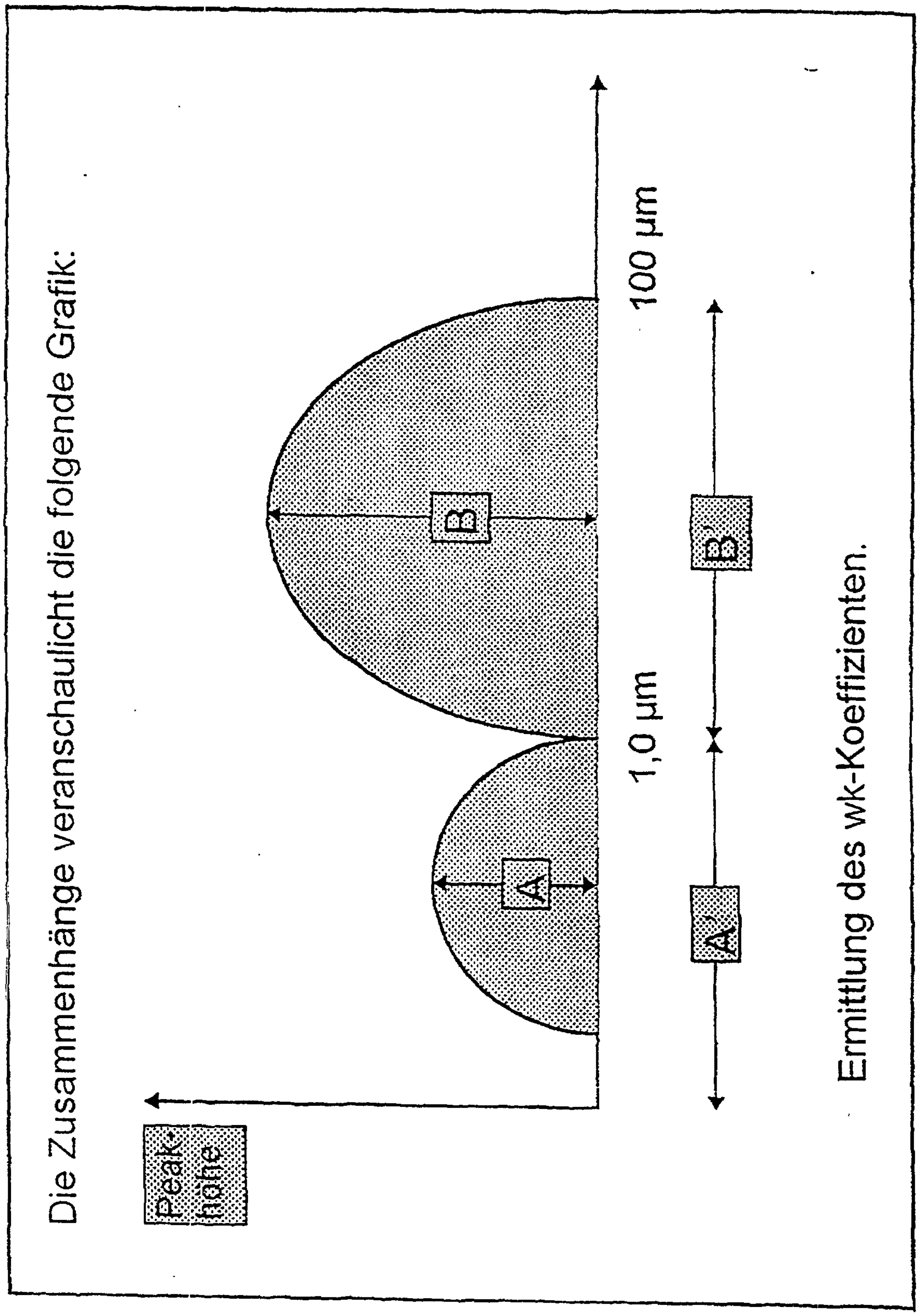
Die Zusammenhänge veranschaulicht die folgende Grafik:
Peak-höhe
A
B
1,0 µm
100 µm
A´
B´
Ermittlung des wk-Koeffizienten.

Figur 6